# EUROPEAN PATENT SPECIFICATION

(11) **EP 4 018 712 B1**
(45) Date of publication and mention of the grant of the patent: **30.10.2024**
(21) Application number: 20872071.4
(22) Date of filing: 16.09.2020
(51) Int. Cl.: H04W 24/02, H04W 8/22, H04L 41/0823

(54) **APPARATUS AND METHOD FOR NETWORK CONFIGURATION**
GERÄT UND VERFAHREN ZUR NETZWERKKONFIGURATION
APPAREIL ET PROCÉDÉ DE CONFIGURATION DE RÉSEAU

(30) Priority: 04.10.2019 GB 201914319; 04.10.2019 GB 201914364; 13.05.2020 GB 202007049
(43) Date of publication of application: 29.06.2022
(73) Proprietor: Samsung Electronics Co., Ltd., Suwon-si, Gyeonggi-do 16677 (KR)
(72) Inventor: BENNETT, Andrew, Suwon-si, Gyeonggi-do, 16677 (KR); SHARIAT, Mehrdad, Suwon-si, Gyeonggi-do, 16677 (KR)
(74) Representative: Gulde & Partner
(86) International application number: PCT/KR2020/012478
(87) International publication number: WO 2021/066352

(56) References cited:
- US-A1- 2017 026 888
- US-A1- 2018 262 924
- "3rd Generation Partnership Project; Technical Specification Group Services and System Aspects; Architecture enhancements for 5G System (5GS) to support network data analytics services (Release 16)", no. V16.1.0, 24 September 2019 (2019-09-24), pages 1 - 52, XP051784663, Retrieved from the Internet <URL:ftp://ftp.3gpp.org/Specs/archive/23_series/23.288/23288-g10.zip 23288-g10.doc> [retrieved on 20190924]
- "3rd Generation Partnership Project; Technical Specification Group Services and System Aspects; Study of Enablers for Network Automation for 5G (Release 16)", 3GPP STANDARD; TECHNICAL REPORT; 3GPP TR 23.791, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V16.2.0, 11 June 2019 (2019-06-11), pages 1 - 124, XP051753968
- CATT: "Update to UE mobility analytics", vol. SA WG2, no. Santa Cruz, Tenerife, Spain; 20190225 - 20190301, 1 March 2019 (2019-03-01), XP051611019, Retrieved from the Internet <URL:http://www.3gpp.org/ftp/tsg%5Fsa/WG2%5FArch/TSGS2%5F131%5FTenerife/Docs/S2%2D1902534%2Ezip> [retrieved on 20190301]
- PATEROMICHELAKIS EMMANOUIL ET AL: "End-to-End Data Analytics Framework for 5G Architecture", IEEE ACCESS, vol. 7, 9 April 2019 (2019-04-09), pages 40295 - 40312, XP011717594, DOI: 10.1109/ACCESS.2019.2902984
- "3rd Generation Partnership Project; Technical Specification Group Services and System Aspects; Architecture enhancements for 5G System (5GS) to support network data analytics services (Release 16)", 3GPP STANDARD; TECHNICAL SPECIFICATION; 3GPP TS 23.288, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V16.1.0, 24 September 2019 (2019-09-24), Mobile Competence Centre ; 650, route des Lucioles ; F-06921 Sophia-Antipolis Cedex ; France, pages 1 - 52, XP051784663
- HUAWEI, HISILICON, TELECOM ITALIA, ZTE, DEUTSCHE TELEKOM, AT&T, CONTINENTAL AUTOMOTIVE GMBH, VOLKSWAGEN AG, FRAUNHOFER HHI, ORANGE: "KI#15: Clean-up of Solution 23", 3GPP DRAFT; S2-1903753 V2X KI15 CLEAN-UP OF SOLUTION 23, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Xi'an, People's Republic of China; 20190, 2 April 2019 (2019-04-02), Mobile Competence Centre ; 650, route des Lucioles ; F-06921 Sophia-Antipolis Cedex ; France, XP051719892
- HUAWEI, HISILICON: "Update to NF Load Analytics", 3GPP DRAFT; S2-1907431 UPDATE TO NF LOAD ANALYTICS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Sapporo, Japan; 20190624 - 20190628, 18 June 2019 (2019-06-18), Mobile Competence Centre ; 650, route des Lucioles ; F-06921 Sophia-Antipolis Cedex ; France, XP051752393
- SAMSUNG: "Updates to input data and procedures of NF load analytics", 3GPP DRAFT; S2-1907364_NF_LOAD_ANALYTICS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Sapporo, Japan; 20190624 - 20190628, 18 June 2019 (2019-06-18), Mobile Competence Centre ; 650, route des Lucioles ; F-06921 Sophia-Antipolis Cedex ; France, XP051752324

## Description

### [Technical Field]

The disclosure relates to controlling. More particularly, the disclosure relates to configuring and/or reconfiguring a Fifth Generation (5G) network.

### [Background Art]

To meet the demand for wireless data traffic having increased since deployment of 4G communication systems, efforts have been made to develop an improved 5G or pre-5G communication system. Therefore, the 5G or pre-5G communication system is also called a 'Beyond 4G Network' or a 'Post LTE System'. The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems. In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like. In the 5G system, Hybrid FSK and QAM Modulation (FQAM) and sliding window superposition coding (SWSC) as an advanced coding modulation (ACM), and filter bank multi carrier (FBMC), non-orthogonal multiple access(NOMA), and sparse code multiple access (SCMA) as an advanced access technology have been developed.

The Internet, which is a human centered connectivity network where humans generate and consume information, is now evolving to the Internet of Things (IoT) where distributed entities, such as things, exchange and process information without human intervention. The Internet of Everything (IoE), which is a combination of the IoT technology and the Big Data processing technology through connection with a cloud server, has emerged. As technology elements, such as "sensing technology", "wired/wireless communication and network infrastructure", "service interface technology", and "Security technology" have been demanded for IoT implementation, a sensor network, a Machine-to-Machine (M2M) communication, Machine Type Communication (MTC), and so forth have been recently researched. Such an IoT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing Information Technology (IT) and various industrial applications.

In line with this, various attempts have been made to apply 5G communication systems to IoT networks. For example, technologies such as a sensor network, Machine Type Communication (MTC), and Machine-to-Machine (M2M) communication may be implemented by beamforming, MIMO, and array antennas. Application of a cloud Radio Access Network (RAN) as the above-described Big Data processing technology may also be considered to be as an example of convergence between the 5G technology and the IoT technology.

The above information is presented as background information only to assist with an understanding of the disclosure. No determination has been made, and no assertion is made, as to whether any of the above might be applicable as prior art with regard to the disclosure. "3rd Generation Partnership Project; Technical Specification Group Services and System Aspects; Architecture enhancements for 5G System (5GS) to support network data analytics services (Release 16)", 3GPP STANDARD; TECHNICAL SPECIFICATION; 3GPP TS 23.288, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V16.1.0 24 September 2019 (2019-09-24), pages 1-52, discusses NF load analytics provided by NWDAF. "3rd Generation Partnership Project; Technical Specification Group Services and System Aspects; Study of Enablers for Network Automation for 5G (Release 16)", 3GPP STANDARD; TECHNICAL REPORT; 3GPP TR 23.791, 3RD GENERATION PARTNERSHIP PROJECT (3GPP), MOBILE COMPETENCE CENTRE ; 650, ROUTE DES LUCIOLES; F-06921 SOPHIA-ANTIPOLIS CEDEX ; FRANCE, vol. SA WG2, no. V16.2.0, 11 June 2019 (2019-06-11), pages 1-124, discusses use of UE analytics in the 5GC. CATT: "Update to UE mobility analytics", 3GPP DRAFT; S2-1902534_WAS_2486_WAS_2086_U PATE TO UE MOBILITY ANALYTIC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX, vol. SA WG2, no. Santa Cruz, Tenerife, Spain; 20190225 - 20190301 1 March 2019 (2019-03-01), discusses update to UE mobility analytics. PATEROMICHELAKIS EMMANOUIL ET AL: "End-to-End Data Analytics Framework for 5G Architecture", IEEE ACCESS, vol. 7, pages 40295-40312, discusses end-to-end data analytics framework for 5G architecture. US 2018/262924 A1 discloses a network data analytics (NWDA) function and method of policy optimization in a communication network.

### [Disclosure of Invention]

### [Technical Problem]

There is a need to provide control, for example configure and/or reconfigure 5G networks, for example based on data obtained from user equipment, (UE).

### [Solution to Problem]

Aspects of the disclosure are to address at least the above-mentioned problems and/or disadvantages and to provide at least the advantages described below.

The invention is set out in the appended set of claims.

Other aspects, advantages, and salient features of the disclosure will become apparent to those skilled in the art from the following detailed description, which, taken in conjunction with the annexed drawings, discloses various embodiments of the disclosure.

### [Advantageous Effects of Invention]

Accordingly, an aspect of the disclosure is to provide a network and a method of controlling a network which at least partially obviates or mitigates at least some of the disadvantages of the prior art, whether identified herein or elsewhere.

Another aspect of the disclosure is to provide a method of controlling a 5G network that improves network performance using data collected from user equipment (UE).

Another aspect of the disclosure is to provide a 5G network that may autonomously configure and/or reconfigure based on data collected from UE.

Additional aspects will be set forth in part in the description which follows and, in part, will be apparent from the description, or may be learned by practice of the presented embodiments.

### [Brief Description of Drawings]

The above and other aspects, features, and advantages of certain embodiments of the disclosure will be more apparent from the following description taken in conjunction with the accompanying drawings, in which:
FIG. 1 schematically depicts a method, or part thereof, according to an embodiment of the disclosure;
FIG. 2 schematically depicts a method, or part thereof, according to an embodiment of the disclosure;
FIG. 3 schematically depicts a method, or part thereof, according to an embodiment of the disclosure;
FIG. 4 schematically depicts a method, or part thereof, according to an embodiment of the disclosure; and
FIG. 5 schematically depicts a method according to an embodiment of the disclosure.

Throughout the drawings, like reference numerals will be understood to refer to like parts, components, and structures.

### [Mode for the Invention]

The following description with reference to the accompanying drawings is provided to assist in a comprehensive understanding of various embodiments of the disclosure as defined by the claims. It includes various specific details to assist in that understanding but these are to be regarded as merely exemplary. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims.

It is to be understood that the singular forms "a," "an," and "the" include plural referents unless the context clearly dictates otherwise. Thus, for example, reference to "a component surface" includes reference to one or more of such surfaces.

According to the disclosure there is provided a method, as set forth in the appended claims. Also provided is a network. Other features of the disclosure will be apparent from the dependent claims, and the description that follows.

### Network

3rd generation partnership project (3GPP) is currently standardizing what is known as service-based architecture (SBA) [1] [2] for the 5G Core as part of System Architecture for 5G systems that has started in Release 15 and will continue to be developed in Release 16 and beyond. In SBA, different network functions and associated services can directly communicate with each other as Originator or Consumer of a service via a common bus known as Service-Based Interface (SBI).

One key function envisioned within SBA is network data analytics function (NWDAF) [3], enabling network functions' access to the analytics for different purposes including intelligent automated network configuration and deployment.

UEs are natural data collection points to gather more localized analytics. UEs may have on-device capabilities to generate analytics and the network may configure the UEs to collect data that are used to generate analytics by in-network intelligence.

When it comes to social behavior and social gatherings like sport matches, concerts, operas festivals, and the like, several UEs may adopt tightly correlated behaviors that is referred to herein as "collective behavior" without any explicit group designation. As an example, such UEs may adopt a similar route, velocity, orientation and/or mobility pattern as a collective behavior within a joint or common event (e.g., to reach a destination). Another type of collective behavior can be monitored based on social protocols that UEs have to adhere to in certain locations such as public settings e.g., within trains, buses, shopping malls, restaurants, factories and the like, where a combination of relative proximity, orientation and/or the time interval spent in such locations becomes valuable information based on public health and safety regulations. As a result, collecting input data from UEs that reflect user intent or indicate likely actions that such UEs may take (or have taken) can be useful to generate analytics data within the 5G Core (5GC) at NWDAF. It should be understood that UEs are generally associated with, for example in close proximity to such as held or carried by, respective users. Hence, the behavior or intent of a particular user can be correspondingly tracked by the associated UE thereof.

Collective behavior patterns can be deduced based on a multitude of UE input data (i.e., from a single or plurality of UEs) including sensor information, device to device signaling, new generation of on-device personal assistant platforms relying on advanced natural language processing (NLP) techniques or any enhancements via more generic natural body language gestures and expressions.

The user intents and user collective behavior thus obtained are input data that may be used by the UE and/or the network to generate analytics for use in automated network configuration, deployment or any associated public safety actions and responses, for example.

Described herein are novel methods, procedures, service flows and triggers on how on-device UE input data (including e.g., NLP, sensor data, proximity information) in coordination with network data analytics function within 5G Core (5GC) provides a powerful tool for communication service providers (CSPs) to autonomously (re)configure network functions and parameters, for example to optimize system performance and/or to facilitate public safety actions and responses based on end-user collective behavior.

NLP as used in this disclosure covers both natural language processing and any enhancements via more generic natural body language gestures and expressions.

The first aspect provides a method of controlling, preferably configuring and/or reconfiguring, a 5G network comprising a set of UE including a first UE, the method comprising configuring the set of UEs, for example the first UE, for collecting data therefrom, collecting data from the set of UEs, mapping the collected data to a user intent, and controlling, preferably configuring and/or reconfiguring, the network based, at least in part, on the mapped user intent.

In this way, network performance may be improved, using data collected from the set of UEs.

The method comprises configuring the set of UEs, for example the first UE, for collecting data therefrom. In one example, configuring the set of UEs for collecting the data therefrom comprises defining what data are to be collected and/or defining how the data are to be collected. For example, the set of UEs, such as applications thereof, may be configured based on operator preferences, such as setting appropriate tagging and/or characterization, to configure collection of data from control plane (CP), user plane (UP) or via trace collection element (TCE) controlled by operations, administration and management (OAM), and/or to set privacy parameters.

In one example, configuring the set of UEs comprises setting configuration parameters thereof at an application function (AF) level, for example via an operator-driven application server or via NWDAF assistance.

In one example, configuring the set of UEs for collecting data therefrom comprises setting a path for collecting the data from the set of UEs, for example via policy control function (PCF).

In one example, the method comprises subscribing, by the access mobility management function (AMF), to unified data management (UDM) notifications, for example on user profile updates.

In one example, the method comprises subscribing, by the PCF, to AF, for example on configuring UE policies on path of data collection (CP, UP or via TCE/OAM) per UE and/ or privacy parameters. If parameters are related to data collection path, privacy or anonymization configuration, PCF may initiate UE configuration update in operation 4 (instead of UDM) triggered by AF request in operation 3, as described below.

In one example, setting configuration parameters of the set of UEs at an AF level via NWDAF assistance comprises subscribing, by the AF, to the NWDAF, optionally via network exposure function (NEF), to obtain UE analytics, for example UE mobility and/or communication analytics for the first UE and/or the set of UEs. In one example, the AF receives notification of the UE analytics therefrom.

In one example, setting configuration parameters of the set of UEs comprises determining, by the AF, the configuration parameters based on operator preference, if the configuration parameters are set at an AF level via an operator-driven application server, or determining the configuration parameters based on the UE analytics received by the AF from the NWDAF, if the configuration parameters are set via NWDAF assistance.

In one example, setting configuration parameters of the set of UEs comprises creating and/or updating, by the UDM, the configuration parameters, in response to a request received from the AF, for example via the NEF. Optionally, the request (i.e., payload) includes an identifier of the first UE, for example a GPSI, a transaction reference identifier, application level parameters such as NLP tagging parameters, parameters related to a data collection path and/or privacy and/or an anonymization configuration parameters, as described below. In one example, the method comprises notifying, by the UDM, the configuration parameters to the AMF, in response to the request.

In one example, setting configuration parameters of the set of UEs comprises initiating, by the AMF, updating of the set of UEs, for example the first UE, therewith, for example to update user profile information.

In one example, setting configuration parameters of the set of UEs comprises initiating, by the PCF, updating of the set of UEs, for example the first UE, therewith, for example to update user policy information. If parameters are related to data collection path, privacy or anonymization configuration, PCF may initiate UE configuration update in operation 4 (instead of UDM) triggered by AF request in operation 3, as described below.

In one example, collecting data from the set of UEs comprises anonymizing the data. In this way, the data may be protected and/or privacy of individual subscribers (i.e., users) maintained.

In one example, anonymizing the data comprises anonymizing the data when configuring the set of UEs, for example by defining anonymization policies when setting the configuration parameters, for example by defining unique pseudonyms for the payloads. In this way, personally identifiable information (PII) may be decoupled from the data.

In one example, anonymizing the data comprises anonymizing the data when collecting data from the set of UEs. For example, PII may be decoupled from the data based on anonymization policies defined as described above. In one example, for CP data collection, anonymizing the data comprises using, by the AMF, 5G globally unique temporary identifier (5G-GUTI) for each UE of the set of UEs. In one example, for UP data collection, anonymizing the data comprises, replacing, by the user plane function (UPF) and/or session management function (SMF), respective identifiers with pseudonyms, for example temporarily assigned pseudonyms, for each UE of the set of UEs. The respective identifiers may be replaced regularly or via a triggering mechanism. Additionally and/or alternatively, the UPF and/or SMF may aggregate data and/or mask individual subscription permanent identifiers (SUPIs), for example when exposing analytics payloads to the NWDAF. In one example, for OAM data collection, anonymizing the data comprises, replacing, by the Management System, respective identifiers with pseudonyms, for example temporarily assigned pseudonyms, for each UE of the set of UEs. The respective identifiers may be replaced regularly or via a triggering mechanism.

In one example, the path for collecting data from the set of UEs (CP, UP and/or management plane) is set via PCF.

In one example, collecting data from the set of UEs via the CP comprises subscribing, by the NWDAF to the AMF, to an AMF event exposure service, for the first UE or the set of UEs. In one example, the subscribing defines a minimum subset of the set of UEs, for example to maintain anonymity. In one example, the subscribing defines a data collection timer as a minimum time during which the AMF collects data before aggregating and/or anonymizing analytics unless the minimum subset is reached. In one example, the subscribing comprises providing, by the set of UEs, for example the first UE, the data to the AMF, for example over UL N1 in one or more UL NAS TRANSPORT messages, optionally using 5G-GUTIs. In one example, the subscribing comprises identifying, by the AMF, the data and aggregating analytics, for example from individual 5G-GUTI corresponding to individual target SUPI (uncovered case) or from group of 5G-GUTIs corresponding to target group of SUPIs (anonymization case).

In one example, collecting data from the set of UEs via the UP comprises subscribing, by the NWDAF to the SMF, for updates from the first UE or the set of UEs. In one example, the subscribing comprises indicating, by the first UE, to the network that UP messages or header messages (for example, of corresponding packet data unit (PDU) messages) will include UE data. In one example, the subscribing comprises invoking, by the AMF, PDU session establishment or invoking, by the AMF, Update SM Context service from the SMF, thereby enabling the SMF to configure the UPF on which UP messages or headers of UP PDU messages are to be extracted. In one example, the subscribing comprises updating, by the SMF, the UPF, for example via N4 session modification, and optionally, instructing analytics extraction from the established PDU session or from the UP messages or headers of UP PDU messages. In one example, the subscribing comprises providing, by the set of UEs for example by the first UE, the data over the established PDU session or relevant headers of UP PDU messages to the UPF over a single or multiple UL messages. In one example, the subscribing comprises extracting, by the UPF, the data provided by the set of UEs, for example by the first UE. In one example, the subscribing comprises aggregating analytics, for example for the set of UEs and/or for multiple messages and notifying the aggregated analytics to the NWDAF, optionally comprising masking individual SUPIs for anonymization. In one example, collecting data from the set of UEs via the UP comprises subscribing, by the NWDAF to the UPF, for updates from the first UE or the set of UEs, as described with respect to the SMF, mutatis mutandis.

In one example, collecting data from the set of UEs via the UP comprises subscribing, by the NWDAF to the Management System/OAM, for updates from the first UE or the set of UEs. In one example, the subscribing comprises initiating, by the Management System/OAM, Trace Session Activation via NG-RAN. In one example, the subscribing comprises aggregating, by the Management System/OAM, analytics from trace recording reports and notifying the aggregated analytics to the NWDAF, optionally comprising masking individual SUPIs for anonymization. In other words, collecting data from the set of UEs may comprise aggregating the data.

In one example, controlling the network based, at least in part, on the mapped user intent comprises requesting, by the consumer NF, analytics, for example for NF load analytics, optionally for a specific NF instance, from the NWDAF. In one example, requesting comprises setting a time window for which to receive the analytics. In one example, controlling the network based, at least in part, on the mapped user intent comprises subscribing, by the NWDAF, to one or more designated analytic data collection parts for one or more, for example all, SUPIs within an area of interest (i.e., a geographical area of interest), optionally comprising retrieving NF load analytics from a specific and/or each NF instance. In one example, controlling the network based, at least in part, on the mapped user intent comprises processing, by the NWDAF, the analytics, for example with respect to collective movement patterns and/or collective behavior patterns, optionally combined with current NF load analytics. In one example, controlling the network based, at least in part, on the mapped user intent comprises predicting, by the NWDAF, a load change, for example a pattern of load change, such as across one or more tracking areas (TAs) and/or one or more AMF regions and, providing the predicted load change to the consumer NF, for example periodically. In one example, controlling the network based, at least in part, on the mapped user intent comprises configuring and/or reconfiguring the network, for example the consumer NF, based, at least in part, on the predicted load change, for example by the consumer NF. In one example, the consumer NF is a single instance, for example an AMF instance. In one example, the consumer NF is a master NF instance, for example a master AMF instance of a set thereof, arranged to configure and/or reconfigure the remaining AMF instances in the set. In one example, the consumer NF is the OAM, arranged to configure and/or reconfigure one or more, for example all, NF instances, for example via corresponding management services.

In one example, controlling the network based, at least in part, on the mapped user intent comprises pre-emptive Control Plane load balancing and/or re-balancing, for example by adjusting weight factors of AMF instances.

In one example, mapping the collected data to the user intent comprises recognizing, interpreting and learning, at least in part, the user intent based on one or more of speech, expression, gesture, sensor and proximity data acquired by the first UE.

In one example, mapping the collected data to the user intent comprises learning, at least in part, the user intent collectively for the set of UE. For example, the learning is based on collective user behavior from the set of users, as described previously.

In one example, mapping the collected data to the user intent comprises mapping the collected data comprises using natural language programming, NLP, to map the data and/or the collected data to the user intent.

In one example, mapping the collected data to the user intent comprises receiving instructions, comprising audio data such as speech and/or an expression such as a vocal expression and/or image data such as a gesture and/or an expression such as a physical expression, from a set of users including a first user, transcribing the received instructions, mapping, using natural language programming, NLP, the transcribed instructions to the user intent.

In one example, method is of controlling, preferably configuring and/or reconfiguring, a 5G network comprising a set of UE including a first UE, the method comprising receiving instructions, comprising audio data such as speech and/or an expression such as a vocal expression and/or image data such as a gesture and/or an expression such as a physical expression, from a set of users including a first user, transcribing the received instructions, mapping, using natural language programming, NLP, the transcribed instructions to a user intent, and controlling, preferably configuring and/or reconfiguring, the network based, at least in part, on the mapped user intent.

In one example, mapping, using NLP, the transcribed instructions to the user intent is based, at least in part, based on NLP configurations, for example provided by an in-network NLP server.

In one example, the NLP configurations include an anonymization policy.

In one example, the method comprises decoupling the user intent from personally identifiable information, PII, of the first user.

In one example, the set of users includes N users, wherein N is a natural number greater than or equal to 1, such as a group of users, for example 1, 2, 3, 4, 5, 6, 7, 8, 9, 10, 50, 100, 500, 1000, 5000, 10000 or more.

In one example, the method comprises learning collective user behavior from the set of users and optionally, providing a recommendation, such as statistics or a prediction, for controlling the network.

In one example, the method comprises providing, for example to the first UE, the recommendation.

In one example, the method comprises configuring, by the network, the first UE, for example based on operator settings such as preferences.

In one example, configuring, by the network, the first UE comprises setting UE configuration parameters at an Application Function, AF, level.

In one example, setting the UE configuration parameters at the AF level is via Network Data Analytics Function, NWDAF, assistance.

In one example, wherein receiving the instructions from the set of users including the first user comprises collecting, by the network, the instructions, for example via a control plane, CP, a user plane, UP, and/or a management plane.

In one example, the method comprises requesting, for example by a consumer network function, NF, for analytics for NF loading, for example for a specific NF instance, optionally wherein the consumer NF is a single NF instance, a master NF instance or an operation, administration and management, OAM, NF.

In one example, the method comprises applying a weight factor to an access and mobility management function, AMF, and/or load balancing the network.

In one example, the network comprises an AMF, a NWDAF, a unified data repository (UDR), a UDM, a NEF, an AF, (R)AN, a SMF, a UPF, an OAM TCE, a consumer network function (NF) and/or a network repository function (NRF).

### Network

The second aspect provides a 5G network comprising a set of UE including a first UE, wherein the network is arranged to configure the set of UEs, for example the first UE, for collecting data therefrom, collect data from the set of UEs, map the collected data to a user intent, and control, preferably configure and/or reconfigure, the network based, at least in part, on the mapped user intent.

The network, the set of UE, the first UE, the collecting, the data, the mapping, the collected data, the user intent, the controlling, the configuring, the reconfiguring and/or the mapped user intent maybe as described with respect to the first aspect.

### Computer

The third aspect provides a computer comprising a processor and a memory configured to implement, at least in part, a method according to the first aspect.

### Computer program

The fourth aspect provides a computer program comprising instructions which, when executed by a computer comprising a processor and a memory, cause the computer to perform, at least in part, a method according to the first aspect.

### Non-transient computer-readable storage medium

The fifth aspect provides a non-transient computer-readable storage medium comprising instructions which, when executed by a computer comprising a processor and a memory, cause the computer to perform, at least in part, a method according to the first aspect.

### Definitions

Throughout this specification, the term "comprising" or "comprises" means including the component(s) specified but not to the exclusion of the presence of other components. The term "consisting essentially of" or "consists essentially of" means including the components specified but excluding other components except for materials present as impurities, unavoidable materials present as a result of processes used to provide the components, and components added for a purpose other than achieving the technical effect of the disclosure, such as colorants, and the like.

The term "consisting of" or "consists of" means including the components specified but excluding other components.

Whenever appropriate, depending upon the context, the use of the term "comprises" or "comprising" may also be taken to include the meaning "consists essentially of" or "consisting essentially of", and also may also be taken to include the meaning "consists of" or "consisting of".

The optional features set out herein may be used either individually or in combination with each other where appropriate and particularly in the combinations as set out in the accompanying claims. The optional features for each aspect or embodiment of the disclosure, as set out herein are also applicable to all other aspects or embodiments of the disclosure, where appropriate. In other words, the skilled person reading this specification should consider the optional features for each aspect or embodiment of the disclosure as interchangeable and combinable between different aspects and embodiments.

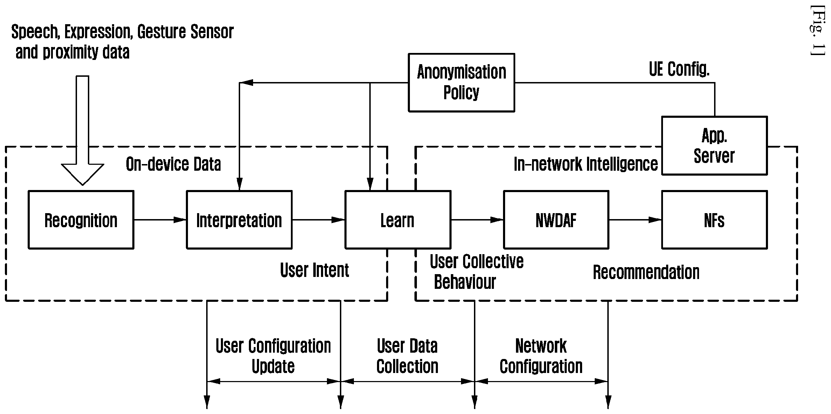

FIG. 1 schematically depicts a method, or part thereof, according to an embodiment of the disclosure. More particularly, FIG. 1 schematically depicts different stages of network configuration based on UE data.

Referring to FIG. 1, different stages of network configuration based on on-device UE input data is illustrated. As shown, on-device UE input data may firstly be used to recognize subscriber(s) (also known as user(s)) speech, expression, gesture, sensor and/or proximity data (or any other UE-driven data). Next, a data interpretation engine on the UE maps the input data to user intent based on UE configuration parameters provided by an in-network application server. The UE configuration parameters may also include an anonymization policy, as described below, applicable at one or multiple stages of user configuration update and/or user data collection.

Collective user behavior can be learnt out of or from a group of individual user intents in-network (after data collection) i.e., from the in-network intents of a group of individual users. Based upon collective user behavior, for example in response thereto, the NWDAF may provide recommendations (such as in the form of statistics or predictions) to be used by other NFs within SGC for autonomous network (re-)configuration.

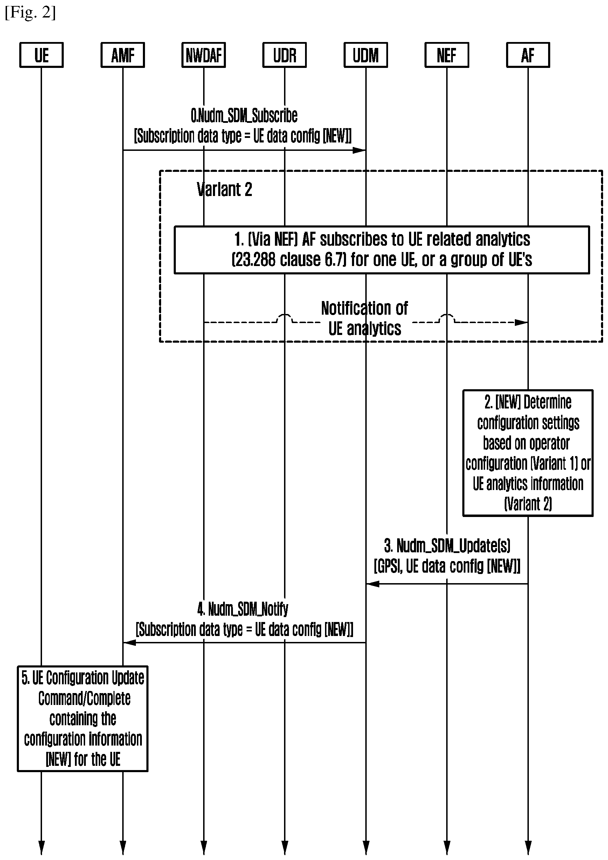

FIGS. 2 to 4 include various known network functions/entities, whose known functions and definitions are described in at least: 3GPP TS 23.501, 3GPP TS 23.502 and 3GPP TS 23.503. The various known functions of these network functions/entities are varied/enhanced, as described herein, according to the method of the first aspect.

For completeness, the various functions/entities shown in FIGS. 2 to 4 are:
User Equipment: UE
(Radio) Access Network: (R)AN
Access and Mobility Management Function: AMF
Session Management Function: SMF
User Plane Function: UPF
User Data Management: UDM
Unified Data Repository: UDR
Network Exposure Function: NEF
Application Function: AF
Network Repository Function: NRF
Administration and Maintenance: OAM
Policy Control function: PCF

### A. UE Configuration Update to Collect Analytics

FIG. 2 schematically depicts a method, or part thereof, according to an embodiment of the disclosure.

Referring to FIG. 2, it schematically depicts call flow of UCU to collect UE data analytics.

As outlined, for autonomous network configuration, on-device (i.e., UE) application(s) may need to be configured based on Operator preferences (e.g., to set the right tagging/ categorization or other application level parameters, to configure the analytics data collection path from Control Plane, User Plane or via trace collection element (TCE) controlled by OAM, or to set privacy parameters). The service flow described below considers two related variants of UE configuration:
A.1. Variant 1 (AF-driven): In this variant, UE configuration parameters are set at AF level (e.g., via an operator-driven Application server).
A.2. Variant 2 (AF-driven, NWDAF-assisted): In this variant, UE configuration parameters are set at AF level via NWDAF assistance.

The operations of this service flow are schematically depicted in FIG. 2.

0. The AMF subscribes to UDM notifications on user profile updates, by sending a Nudm_SDM_Subscribe message [Subscription data type = UE data config] thereto.
1. [Conditional on NWDAF assistance - Variant 2] The AF may (i.e., optionally) subscribe to NWDAF via NEF to obtain UE-behavior analytics (e.g., UE mobility or Communication Analytics) for a UE, or a group of UEs, in order to set (see operation 2) configuration parameters for the UE or the group of UEs based on these analytics. In response, the AF receives notification of UE analytics therefrom.
2. The AF determines configuration parameters (also known as settings) either based on Operator preference (Variant 1) or based on analytics extracted via (i.e., received from) the NWDAF (Operation 1-Variant 2).
3. The AF provides configuration parameters to be created (updated) on UDM/UDR via the NEF (with input parameters: GPSI as the UE identifier (or any other external UE identifier) and the Transaction Reference ID), by sending a Nudm_SDM_Update(s) message to the UDM. The payload of operation 3 may include application level parameters (e.g., NLP tagging parameters) (or any other relevant IEs). In addition, the payload may include parameters related to a data collection path i.e., UE access selection and PDU Session selection related policy information (e.g., from CP, UP or OAM) or privacy and anonymization configuration parameters as detailed in section 3.3.B (Analytics Anonymization).
4. The UDM notifies the updates (i.e., the configuration parameters) to the relevant AMF by invoking Nudm_SDM_Notify service operation [Subscription data type = UE data config].

NOTE 1: If the configuration parameters are related to data collection path, privacy or anonymization configuration, the PCF may initiate UE configuration update in operation 4 (instead of UDM) triggered by AF request in operation 3.

5. The AMF initiates UE Configuration Update (via N1) on the UE to update user profile information related to the configuration parameters, received from the AF via the UDM.

### B. Analytics Anonymization

In order to ensure the protection of data and the privacy of individual subscribers, the analytics anonymization can be performed in multiple ways, as described below with reference to FIG. 1.

### B.1. At the UE configuration stage:

The operator-driven application server (at AF level) may define specific anonymization/tagging policies ensuring that any interpreted application related data, such as user intent data, that are derived from a multitude of UE input data is fully decoupled from personally identifiable information (PII) for example by defining a unique pseudonym (e.g., a container ID) for the payload of 3.3.A - operation 3 (User Configuration Update) either AF-driven (Variant 1) or with NWDAF-assistance (Variant 2). This is to avoid singling out, by linkage or inference, individuals based on the collected data.

### B.2. At the data collection stage:

At the data collection stage, the PII is decoupled (and removed) from derived UE input data or analytics based on the anonymization policies set at the UE configuration stage (as outlined above in 3.3.B.1). Furthermore, it is ensured that the UE ID (and similar user identifiers) are pseudonymized or masked via aggregation at this stage.

In one example, for CP data collection, the AMF leverages the 5G-GUTI temporary assigned values per UE as already standardized in 3GPP to pseudonymize the UE ID. Furthermore, the AMF may aggregate analytics data or mask individual SUPIs (e.g., using similar pseudonym as 3.3.B.1.), when exposing analytics payloads to the NWDAF.

In one example, for UP data collection, the UPF/SMF replaces the UE identifier with a temporary assigned pseudonym per UE, either regularly (based on an anonymization cycle) or via a triggering mechanism from UE/network Operator. Furthermore, the UPF/SMF may aggregate analytics data or mask individual SUPIs (e.g., using similar pseudonym as 3.3.B.1.), when exposing analytics payloads to the NWDAF.

In one example, for OAM data collection, the Management System replaces the UE identifier with a temporary assigned pseudonym per UE, either regularly (based on an anonymization cycle) or via a triggering mechanism from UE/network Operator. Furthermore, the OAM may aggregate analytics data or mask individual SUPIs (e.g., using similar pseudonym as 3.3.B.1.), when exposing analytics payloads to the NWDAF.

### C. Data Collection from UE

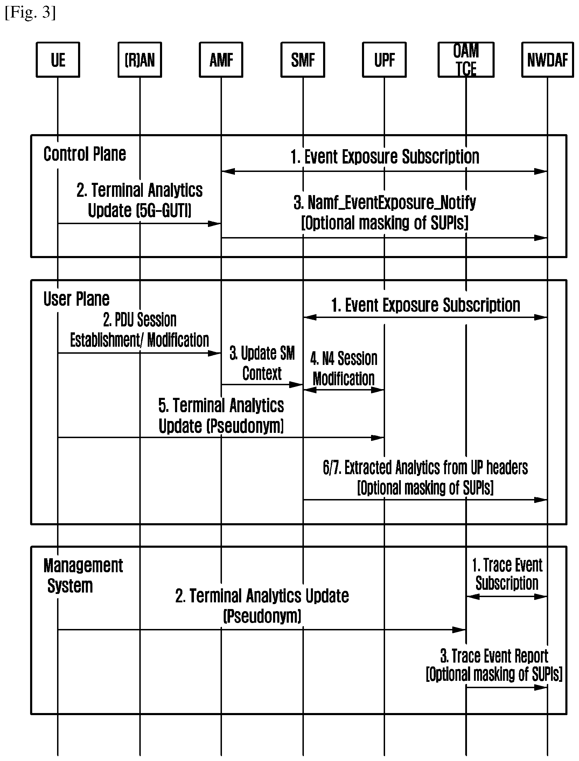

FIG. 3 schematically depicts a method, or part thereof, according to an embodiment of the disclosure.

Referring to FIG. 3, it schematically depicts call flow of UE input data collection procedure.

Data collection path for analytics may be set based on configuration via the CP, UP or Management plane via PCF as outlined in 3.3.A, operation 4.

The call flow for three examples of data collection from the UE is described below with reference to Figure 3.

### C.1. Control Plane (CP) Procedure

1. Assuming in this example that the configuration parameters are configured by the Operator, the NWDAF may subscribe to an AMF Event Exposure service based on an Event ID designated for UE input data to be informed of all occurrences of this event. The subscription can be set for an individual SUPI (i.e., via mapping similar pseudonym as 3.3.B. 1 to UE ID), in a case of consented uncovered UEs or for a group of SUPIs together in a case of anonymized UEs. AMF responds to the request, also providing subscription correlation ID.
   Note: The subscription request may define a minimum group size for the data collection to ensure anonymity can be sufficiently achieved. The subscription request may also define a collection window timer as the minimum time that AMF needs to wait before aggregating/ anonymizing the analytics unless the analytics data from the minimum group size is received.
2. The UE(s) provides Terminal Analytics (i.e., UE input data) over UL N1 to the AMF. Each UE may provide Terminal Analytics over a single or multiple UL NAS TRANSPORT messages dependent on NG-RAN setting and the parameters set during user configuration operation. 5G Globally Unique Temporary Identifiers (5G-GUTIs) may be used to keep the subscriber's International Mobile Subscriber Identity (IMSI) confidential.
3. AMF identifies UE input data Event and aggregates analytics either from individual 5G-GUTI corresponding to individual target SUPI (uncovered case) or from group of 5G-GUTIs corresponding to target group of SUPIs (anonymization case). In anonymization case, aggregation occurs either when the minimum group size is reached or when the collection window timer expires. AMF notifies the event, along with the analytics payload, towards the subscribed NWDAF with the Notification Target Address (+ Notification Correlation ID), optionally masking individual SUPI per entry of analytics payload in a case of anonymization, using a Namf_ EventExposure_Notify message.

### C.2. User Plane (UP) Procedure

1. Assuming in this example that the configuration parameters are configured by the Operator, the NWDAF may subscribe to SMF for UE input data update.
2. Based on user configuration update, UE indicates to the network (via invoking a PDU session establishment or modification) that UP messages or header messages (of corresponding PDU messages) shall be populated with UE input data.
3. In response, the AMF invokes PDU session establishment procedure or Update SM Context service from SMF enabling SMF to configure UPF on which UP messages or headers of UP PDU messages to be extracted.
4. The SMF will accordingly update the UPF (via N4 session modification) and instruct on analytics extraction from the established PDU session or relevant headers based on a newly proposed attribute within packet detection rules (as part of N4 session Context), for example as described in TS23.501.
5. The UE (s) provide Terminal Analytics (i.e., UE input data) over the established PDU session or relevant headers of UP PDU messages to the UPF over a single or multiple UL messages dependent on NG-RAN setting and the parameters set during user configuration update operations. Pseudonyms may be used, as described herein.
6. The UPF extracts UE input data from the established PDU session and/or relevant headers of UP PDU messages and delivers the (buffered) data to the SMF.
7. The SMF aggregates analytics across multiple messages and/or multiple UEs. The SMF notifies the Terminal analytics (i.e., UE input data) in CP towards subscribed NWDAF, optionally masking individual SUPI per entry of analytics payload in a case of anonymization.

Note: As an alternative for example C.2 procedure, in operation 1, the NWDAF may subscribe to UPF (instead of SMF) for UE input data update. Accordingly, in operations 6 and 7, the UPF itself may proceed to aggregate the analytics extracted from the established PDU session or relevant headers of UP PDU messages and directly notify the analytics to subscribed NWDAF (under SMF instructions at Operation 4.)

### C.3. Management System Procedure

1. Assuming in this example that the configuration parameters are configured by the Operator, the NWDAF subscribes to (or sends a request) to the Management System (trace event subscription). The request may include an individual SUPI (i.e., via mapping similar pseudonym as 3.3.B.1 to UE ID), in a case of consented uncovered UEs or for a group of SUPIs together in a case of anonymized UEs.
2. The Management System/OAM initiates the Trace Session Activation via NG-RAN according to the request received from NWDAF and collects trace recording report(s) whenever target UE(s) provide Terminal Analytics (i.e., UE input data). Pseudonyms may be used, as described herein.
3. The Management System/OAM aggregates Terminal Analytics (i.e., UE input data) from trace recording report(s) and notifies analytics towards NWDAF, optionally masking individual SUPI per entry of analytics payload in a case of anonymization.

### D. Network Configuration

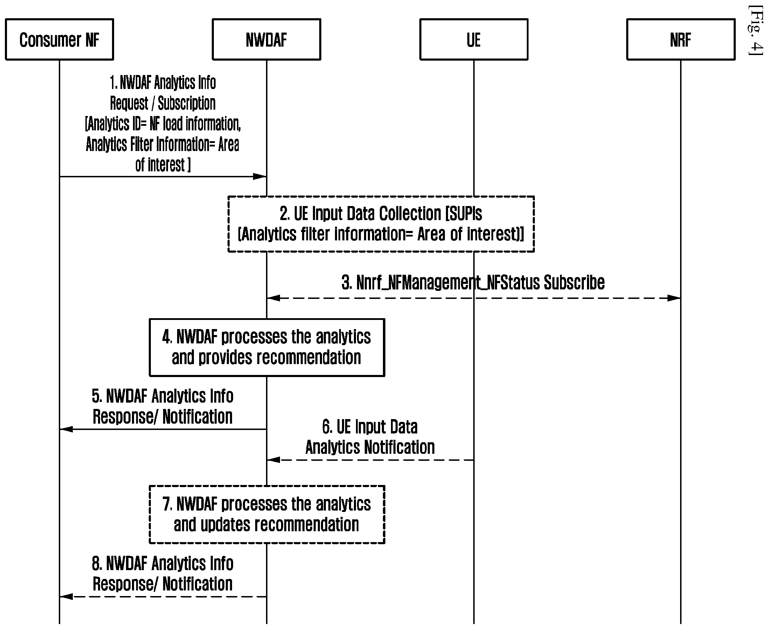

FIG. 4 schematically depicts a method, or part thereof, according to an embodiment of the disclosure.

Referring to FIG. 4, it schematically depicts service flow for network (re)configuration.
this example, other NFs within 5GC incorporate analytics generated based on UE input data, gathered at NWDAF (or any outcome recommendations), to autonomously (re)configure network parameters and/or to optimize system performance.

The service-flow of the above procedure is described below with reference to FIG. 4.
1. The Consumer NF sends a request to the NWDAF for analytics for NF load for specific NF instances, using either the Nnwdaf_ AnalyticsInfo or Nnwdaf_AnalyticsSubscription service. The Analytics ID is set to "NF load information", the target for analytics is set to NF id with a newly proposed analytics filter information based on area of interest (e.g., specific TA or AMF region). The Consumer NF may set a time window in future to get predictions on pattern of load changes with that window.
2. The NWDAF subscribes to designated analytics data collection path for all SUPIs within the area of interest (via setting the analytics filter information to specific TA or AMF region requested at operation 1 by the consumer NF as outlined in Figure 3 and collects the UE input data accordingly).
3. The NWDAF may optionally retrieve the NF load and NF status information from NRF using Nnrf_ NFManagement _NFStatusSubscribe service operation for each NF instance.
4. The NWDAF processes the collected analytics data on collective movement pattern or any other collective behavior pattern and (optionally) combines with current NF load analytics (per AMF instance) retrieved from NRF.
5. The NWDAF provides predicted pattern of load changes across multiple TAs or AMF regions to the Consumer NF.

6-8. If at operation 1, the Consumer NF has subscribed to receive continuous reporting of NF load analytics, the NWDAF may generate new analytics and provide them to the NF upon reception of notification of new analytics data.

Multiple variants of network configuration for load balancing:
In one variant of the disclosure, the Consumer NF can be a single NF instance (e.g., an AMF instance) that individually configures itself based on analytics information provided by NWDAF.

In another variant of the disclosure, the consumer NF can be a master NF instance (e.g., an AMF master instance) designated per NF set that collectively adjusts the configuration for all instances within the set.

In another variant of the disclosure, the consumer NF can be OAM that collects analytics information provided by NWDAF and adjusts the configuration for all NF instances accordingly via corresponding management services.

Below, we provide some examples for network (re)configuration based on service flow of FIG. 4.

### Pre-emptive Control Plane Load balancing / re-balancing

In a case of social events like sport matches, concerts, operas, festivals, and the like, many subscribers may adopt similar routes to a joint or common destination, helping to predict the pattern of load changes across multiple TAs or AMF regions. NWDAF may process the gathered data on device analytics to identify expected changes in load per tracking area (TA) or AMF region via identifying correlation in mobility pattern of group of UEs.

As an embodiment of this disclosure, a weight factor per AMF instance within an AMF set may be pre-emptively adjusted (under Operator policy), based on the above collective movement pattern information (within a given AMF region or TA as defined by TS23.502) to avoid future overloads / congestions. The 5G-(R)AN nodes may have their Load Balancing parameters adjusted accordingly

Similar approach can be adopted for Load re-balancing where for the AMF instances within an AMF set may pro- actively re-balance their load with each other prior to reaching overload i.e., to prevent overload situation.

### NF Selection and Re-selection

The SMF selection functionality is supported by the AMF (and SCP) and is used to allocate an SMF that shall manage the PDU Session. If the AMF performs discovery, the AMF shall utilize the NRF to discover SMF instance(s) unless SMF information is available by other means, e.g., locally configured on AMF. The AMF provides UE location information to the NRF when trying to discover SMF instance(s). The NRF provides NF profile(s) of SMF instance(s) to the AMF. In addition, the NRF also provides the SMF service area of SMF instance(s) to the AMF. The SMF selection functionality in the AMF selects an SMF instance and an SMF service instance based on the available SMF instances obtained from NRF or on the configured SMF information in the AMF.

In one example, the AMF utilizes derived collective user behavior information in addition to NF profile(s) or deployment scenarios to select appropriate target NFs (i.e., SMF).

Similar approaches may be adopted for the selection and reselection of the UPF by the SMF, given UPF deployment scenarios either centrally and distribute.

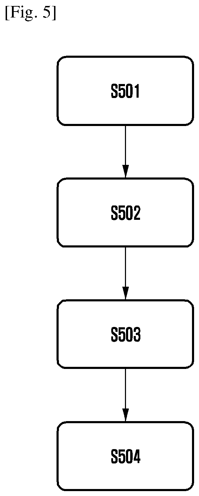

FIG. 5 schematically depicts a method according to an embodiment of the disclosure.

Referring to FIG. 5, the method is of controlling, preferably configuring and/or reconfiguring, a 5G network comprising a set of UE including a first UE.

At operation S501, the method comprises configuring the set of UEs, for example the first UE, for collecting data therefrom.

At operation S502, the method comprises collecting data from the set of UEs.

At operation S503, the method comprises mapping the collected data to a user intent.

At operation S504, the method comprises controlling, preferably configuring and/or reconfiguring, the network based, at least in part, on the mapped user intent.

The method may include any operation as described herein with respect to the first aspect.

Although a preferred embodiment has been shown and described, it will be appreciated by those skilled in the art that various changes and modifications might be made without departing from the scope of the disclosure, as defined in the appended claims and as described above.

### ACRONYMS

Acronyms used herein have their usual meaning and the definitions below are provided for convenience only.

**[Table 1]**

| Acronym | Definition |
|---|---|
| 3GPP | 3^{rd} Generation Partnership Project |
| SGC | 5G Core |
| 5GS | 5G System |
| 5MBS | 5G Multicast Broadcast Service |
| AF | Application Function |
| AMF | Access and Mobility Function, Access and Mobility Management Function |
| AN | Access Network |
| AUSF | Authentication Server Function |
| BM-SC | Broadcast Multicast Service Center |
| BMF | Broadcast Multicast Function |
| BM-SC-C/U | BM-SC Control/User Plane |
| CN | Core Network |
| DN | Data Network |
| eMBMS | enhanced MBMS |
| eNB | enhanced Node B |
| FEC | Forward Error Correction |
| gNB | new generation Node B |
| IIoT | Industrial Internet of Things |
| IP | Internet Protocol |
| MBMS | Multimedia Broadcast Multicast Service |
| MBMS-GW | MBMS Gateway |
| MBS | Multicast/Broadcast Service |
| MBSF | Multicast/Broadcast Service Function |
| MBSU | Multicast/Broadcast Service User plane |
| M-AMF | Multicast Access and Mobility Function |
| MB-UPF | Multicast/Broadcast User Plane Function |
| MB-SMF | Multicast/Broadcast Service Function |
| MCE | Multi-Cell/Multicast Coordination Entity |
| MME | Mobility Management Entity |
| MNO | Mobile Network Operator |
| MooD | Multicast operation on Demand |
| NEF | Network Exposure Function |
| NG-RAN | New Generation RAN |
| NF | Network Function |
| NFV | Network Function Virtualization |
| NRF | NF Repository Function, Network Repository Function |
| NSI | Network Slice Instance |
| NSSF | Network Slice Selection Function |
| NWDAF | Network Data Analytics Function |
| OAM | Administration and Maintenance |
| PCF | Policy Control Function |
| PDU | Packet Data Unit |
| (R)AN | (Radio) Access Network |
| S-NSSAI | Single Network Slice Selection Assistance Information |
| SBA | Service Based Architecture |
| SD | Slice Differentiator |
| SMF | Session Management Function |
| SST | Slice/Service Type |
| UDM | Unified Data Management, User Data Management |
| UDR | Unified Data Repository |
| UE | User Equipment |
| UPF | User Plane Function |
| V2X | Vehicle to Everything |

### REFERENCES

[1] System Architecture for the 5G System, 3GPP SA2 TS 23.501, Release 15
[2] Procedures for the 5G System, 3GPP SA2 TS 23.502, Release 15
[3] Architecture enhancements for 5G System (5GS) to support network data analytics services, 3GPP SA2 TS23.288, Release 16

### NOTES

Attention is directed to all papers and documents which are filed concurrently with or previous to this specification in connection with this application and which are open to public inspection with this specification.

All of the features disclosed in this specification (including any accompanying claims and drawings), and/or all of the operations of any method or process so disclosed, may be combined in any combination, except combinations where such features and/or operations are mutually exclusive.

Each feature disclosed in this specification (including any accompanying claims, and drawings) may be replaced by alternative features.

Thus, unless expressly stated otherwise, each feature disclosed is one example only

## Claims

1. A method performed by a network data analytics function, NWDAF, entity for a network configuration in a wireless communication system, the method comprising:
receiving (1), from a network function, NF, an analytics information request including an analytics identity, ID, set to NF load information and analytics filter information;
setting the analytics filter information to specific tracking areas, TAs, or access and mobility management function, AMF, regions;
collecting (6) from a user equipment, UE, input data including at least one of route, speed, orientation, or destination of the UE;
processing (7) the collected UE input data; and
transmitting (8), to the NF, an analytics information response including predicted pattern of load changes based on the processed UE input data.

2. The method of claim 1, wherein the UE is within the predetermined area

3. The method of claim 1, further comprising:
obtaining (3), from a network repository function, NRF, entity, NF load and NF status information for the NF; and
combining the processed UE input data with the NF load and NF status information for generating the predicted pattern of load changes.

4. The method of claim 1, further comprising:
in case that the NF subscribes to receive continuous reporting, updating the predicted pattern of load changes by processing a newly obtained UE input data; and
transmitting an additional analytics information response including the updated predicted pattern of load changes.

5. The method of claim 1, wherein the UE input data is anonymized based on a policy.

6. The method of claim 1, further comprising:
generating analytics to identify expected changes in load per tracking area, TA, or AMF region in order for operations administration and maintenance, OAM, or other NFs to adjust a weight factor per AMF.

7. A network data analytics function, NWDAF, entity for a network configuration in a wireless communication system, the NWDAF comprising:
a transceiver; and
at least one processor coupled with the transceiver and configured to:
receive (1), from a network function, NF, an analytics information request including an analytics identity, ID, set to NF load information and analytics filter information,
set the analytics filter information to specific tracking areas, TAs, or access and mobility management function, AMF, regions;
collect, from a user equipment, UE, input data including at least one of route, speed, orientation, or destination of the UE;
process (7) the collected UE input data;
and
transmit (8), to the NF, an analytics information response including predicted pattern of load changes based on the processed UE input data.

8. The NWDAF entity of claim 7, wherein the UE is within the predetermined area

9. The NWDAF entity of claim 7, wherein the at least one processor is further configured to:
obtain (3), from a network repository function, NRF, entity, NF load and NF status information for the NF, and
combine the processed UE input data with the NF load and NF status information for generating the predicted pattern of load changes.

10. The NWDAF entity of claim 7, wherein the at least one processor is further configured to:
in case that the NF subscribes to receive continuous reporting, update the predicted pattern of load changes by processing a newly obtained UE input data, and
transmit an additional analytics information response including the updated predicted pattern of load changes.

11. The NWDAF entity of claim 7, wherein the UE input data is anonymized based on a policy.

12. The NWDAF entity of claim 7, wherein the at least one processor is further configured to:
generate analytics to identify expected changes in load per tracking area, TA, or AMF region in order for operations administration and maintenance, OAM, or other NFs to adjust a weight factor per AMF.

## Patentansprüche

1. Verfahren, das von einer Instanz einer Netzdatenanalysefunktion, NWDAF-Instanz, für eine Netzkonfiguration in einem drahtlosen Kommunikationssystem durchgeführt wird, wobei das Verfahren Folgendes umfasst:
Empfangen (1), von einer Netzfunktion, NF, einer Analyseinformationsanforderung, die eine Analyseidentität, ID, enthält, die auf NF-Lastinformationen und Analysefilterinformationen festgelegt ist;
Festlegen der Analysefilterinformationen auf spezifische Tracking-Bereiche, TAs, oder Regionen einer Zugriffs- und Mobilitätsverwaltungsfunktion, AMF-Regionen;
Erfassen (6), von einem Benutzergerät, UE, von Eingabedaten, die mindestens eines von einer Route, einer Geschwindigkeit, einer Ausrichtung oder eines Ziels des UE beinhalten;
Verarbeiten (7) der erfassten UE-Eingabedaten; und
Übertragen (8), an die NF, einer Analyseinformationsantwort, die ein vorhergesagtes Muster von Laständerungen basierend auf den verarbeiteten UE-Eingabedaten beinhaltet.

2. Verfahren nach Anspruch 1, wobei sich das UE innerhalb des vorgegebenen Bereichs befindet.

3. Verfahren nach Anspruch 1, ferner umfassend:
Erhalten (3), von einer Instanz einer Netz-Repository-Funktion, NRF-Instanz, von NF-Last- und NF-Statusinformationen für die NF; und
Kombinieren der verarbeiteten UE-Eingabedaten mit den NF-Last- und NF-Statusinformationen zum Erzeugen des vorhergesagten Musters von Laständerungen.

4. Verfahren nach Anspruch 1, ferner umfassend:
falls die NF einen Empfang kontinuierlicher Berichte abonniert hat, Aktualisieren des vorhergesagten Musters von Laständerungen durch Verarbeiten neu erhaltener UE-Eingabedaten; und
Übertragen einer zusätzlichen Analyseinformationsantwort, die das aktualisierte vorhergesagte Muster von Laständerungen beinhaltet.

5. Verfahren nach Anspruch 1, wobei die UE-Eingabedaten basierend auf einer Richtlinie anonymisiert werden.

6. Verfahren nach Anspruch 1, ferner umfassend:
Erzeugen von Analysen zum Identifizieren erwarteter Laständerungen pro Tracking-Bereich, TA, oder AMF-Region, sodass Operation, Administration and Maintenance, OAM, oder andere NFs einen Gewichtungsfaktor pro AMF anpassen können.

7. Instanz einer Netzdatenanalysefunktion, NWDAF-Instanz, für eine Netzkonfiguration in einem drahtlosen Kommunikationssystem, wobei die NWDAF Folgendes umfasst:
einen Transceiver; und
mindestens einen Prozessor, der mit dem Transceiver gekoppelt ist und konfiguriert ist zum:
Empfangen (1), von einer Netzfunktion, NF, einer Analyseinformationsanforderung, die eine Analyseidentität, ID, enthält, die auf NF-Lastinformationen und Analysefilterinformationen festgelegt ist,
Festlegen der Analysefilterinformationen auf spezifische Tracking-Bereiche, TAs, oder Regionen einer Zugriffs- und Mobilitätsverwaltungsfunktion, AMF-Regionen;
Erfassen, von einem Benutzergerät, UE, von Eingabedaten, die mindestens eines von einer Route, einer Geschwindigkeit, einer Ausrichtung oder eines Ziels des UE beinhalten;
Verarbeiten (7) der erfassten UE-Eingabedaten; und
Übertragen (8), an die NF, einer Analyseinformationsantwort, die ein vorhergesagtes Muster von Laständerungen basierend auf den verarbeiteten UE-Eingabedaten beinhaltet.

8. NWDAF-Instanz nach Anspruch 7, wobei sich das UE innerhalb des vorgegebenen Bereichs befindet.

9. NWDAF-Instanz nach Anspruch 7, wobei der mindestens eine Prozessor ferner konfiguriert ist zum:
Erhalten (3), von einer Instanz einer Netz-Repository-Funktion, NRF-Instanz, von NF-Last- und NF-Statusinformationen für die NF, und
Kombinieren der verarbeiteten UE-Eingabedaten mit den NF-Last- und NF-Statusinformationen zum Erzeugen des vorhergesagten Musters von Laständerungen.

10. NWDAF-Instanz nach Anspruch 7, wobei der mindestens eine Prozessor ferner konfiguriert ist zum:
falls die NF einen Empfang kontinuierlicher Berichte abonniert hat, Aktualisieren des vorhergesagten Musters von Laständerungen durch Verarbeiten neu erhaltener UE-Eingabedaten, und
Übertragen einer zusätzlichen Analyseinformationsantwort, die das aktualisierte vorhergesagte Muster von Laständerungen beinhaltet.

11. NWDAF-Instanz nach Anspruch 7, wobei die UE-Eingabedaten basierend auf einer Richtlinie anonymisiert werden.

12. NWDAF-Instanz nach Anspruch 7, wobei der mindestens eine Prozessor ferner konfiguriert ist zum:
Erzeugen von Analysen zum Identifizieren erwarteter Laständerungen pro Tracking-Bereich, TA, oder AMF-Region, sodass Operation, Administration and Maintenance, OAM, oder andere NFs einen Gewichtungsfaktor pro AMF anpassen können.

## Revendications

1. Procédé exécuté par une entité de fonction d'analyse de données de réseau, NWDAF, dans un système de communication sans fil, le procédé comprenant :
recevoir (1), à partir d'une fonction de réseau, NF, une demande d'informations d'analyse comprenant une identité d'analyse, ID, réglée à des informations de charge NF et à des informations de filtre d'analyse ;
régler les informations du filtre d'analyse sur des zones de suivi, TA, spécifiques ou des régions de la fonction de gestion d'accès et de mobilité, AMF ;
collecter (6), à partir d'un équipement utilisateur, UE, des données d'entrée comprenant au moins l'un de route, de vitesse, d'orientation ou de destination de l'UE ;
traiter (7) les données d'entrée d'UE collectées ; et
transmettre (8), à la FN, une réponse d'informations d'analyse comprenant un modèle prédit de changements de charge basé sur les données d'entrée traitées d'UE.

2. Procédé de la revendication 1, dans lequel l'UE se trouve dans la zone prédéterminée.

3. Procédé de la revendication 1, comprenant en outre :
obtenir (3), à partir d'une entité de fonction de référentiel de réseau, NRF, des informations de charge de NF et d'état de NF pour la NF ; et
combiner les données d'entrée d'UE traitées avec les informations de charge et d'état de FN pour générer le modèle prédit des changements de charge.

4. Procédé de la revendication 1, comprenant en outre :
dans le cas où la FN s'abonne à la réception de rapports continus, mettre à jour le modèle prédit de variations de charge en traitant les données d'entrée d'UE nouvellement obtenues ; et
transmettre une réponse d'informations d'analyse supplémentaire comprenant le modèle prédit actualisé de variations de charge.

5. Procédé de la revendication 1, dans lequel les données d'entrée de l'UE sont rendues anonymes sur la base d'une politique.

6. Procédé de la revendication 1, comprenant en outre :
générer des analyses pour identifier les changements attendus dans la charge par zone de suivi, TA ou région AMF afin que l'administration et la maintenance d'opérations, OAM, ou d'autres FN puissent ajuster un facteur de pondération par AMF.

7. Entité de fonction d'analyse de données de réseau, NWDAF, dans un système de communication sans fil, l'entité NWDAF comprenant :
un émetteur-récepteur ; et
au moins un processeur, couplé à l'émetteur-récepteur et configuré pour :
recevoir (1), à partir d'une fonction de réseau, NF, une demande d'informations d'analyse comprenant une identité d'analyse, ID, réglée à des informations de charge NF et à des informations de filtre d'analyse ;
régler les informations du filtre d'analyse sur des zones de suivi, TA, spécifiques ou des régions de la fonction de gestion d'accès et de mobilité, AMF ;
collecter (6), à partir d'un équipement utilisateur, UE, des données d'entrée comprenant au moins l'un de route, de vitesse, d'orientation ou de destination de l'UE ;
traiter (7) les données d'entrée d'UE collectées ; et
transmettre (8), à la FN, une réponse d'informations d'analyse comprenant un modèle prédit de changements de charge basé sur les données d'entrée traitées d'UE.

8. Entité NWDAF de la revendication 7, dans laquelle l'UE se trouve dans la zone prédéterminée.

9. Entité NWDAF de la revendication 7, dans laquelle l'au moins un processeur est en outre configuré pour :
obtenir (3), à partir d'une entité de fonction de référentiel de réseau, NRF, des informations de charge de NF et d'état de NF pour la NF ; et
combiner les données d'entrée d'UE traitées avec les informations de charge et d'état de FN pour générer le modèle prédit des changements de charge.

10. Entité NWDAF de la revendication 7, dans laquelle l'au moins un processeur est en outre configuré pour :
dans le cas où la FN s'abonne à la réception de rapports continus, mettre à jour le modèle prédit de variations de charge en traitant les données d'entrée d'UE nouvellement obtenues ; et
transmettre une réponse d'informations d'analyse supplémentaire comprenant le modèle prédit actualisé de variations de charge.

11. Entité NWDAF de la revendication 7, dans laquelle les données d'entrée d'UE sont rendues anonymes sur la base d'une politique.

12. Entité NWDAF de la revendication 7, dans laquelle l'au moins un processeur est en outre configuré pour :
générer des analyses pour identifier les changements attendus dans la charge par zone de suivi, TA ou région AMF afin que l'administration et la maintenance d'opérations, OAM, ou d'autres FN puissent ajuster un facteur de pondération par AMF.
